(19) Europäisches Patentamt
European Patent Office
Office européen des brevets

(11) EP 1 889 884 B1

(12) **EUROPEAN PATENT SPECIFICATION**

(45) Date of publication and mention of the grant of the patent:
**11.11.2009 Bulletin 2009/46**

(21) Application number: **07103210.6**

(22) Date of filing: **28.02.2007**

(51) Int Cl.:
***C09D 11/00*** *(2006.01)*

(54) **Ink composition for inkjet recording**

Tintenzusammensetzung für Tintenstrahlaufzeichnung

Composition d'encre pour enregistrement à jet d'encre

(84) Designated Contracting States:
**DE FR GB NL**

(30) Priority: **14.08.2006 KR 20060076727**

(43) Date of publication of application:
**20.02.2008 Bulletin 2008/08**

(73) Proprietor: **SAMSUNG ELECTRONICS CO., LTD.**
**Suwon-si,**
**Gyeonggi-do 442-742 (KR)**

(72) Inventors:
- **Kim, In-hye**
**Eunpyeong-gu**
**Seoul (KR)**
- **Lee, Jong-in**
**Suwon-si**
**Gyeonggi-do (KR)**

(74) Representative: **Moy, David et al**
**Appleyard Lees**
**15 Clare Road**
**Halifax, Yorkshire HX1 2HY (GB)**

(56) References cited:
**WO-A-00/53597**
**US-A- 5 569 317**
**US-A1- 2006 117 994**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 889 884 B1

Printed by Jouve, 75001 PARIS (FR)

## Description

The present invention relates to an ink composition for inkjet recording. More particularly, the invention relates to an ink composition for inkjet recording that exhibits reduced bleeding between colors of a printed image, and improved dry and wet rub fastness of a printed image.

In general, in the inkjet printing field, coloring agents embody their inherent colors by selectively absorbing or reflecting visible light, and are classified as dyestuffs and pigments. Dyestuffs are used in any material to be dyed, such as fibers, leathers, furs, and papers, thereby providing considerable fastness to washing in daylight hours, friction, and the like. Pigments are coloring matters in the form of particulates, and are directly adhered to the surface of the material to be dyed, by physical means (e.g., adhesion, and the like), thereby providing their inherent colors.

Dyestuffs are dissolved in solvents such as water, but pigments are generally insoluble to the solvents. Thus, it is important to homogeneously disperse a pigment particulate in a solution, thereby stably maintaining the dispersed state without re-aggregation.

A water soluble dyestuff-type ink is very superior in long-term storage stability, maintaining its homogeneity, and having clear color and brightness, while it is weak in water fastness, light resistance, and the like. On the other hand, a pigment-type ink has high optical density (OD), and superior water fastness and light resistance, and exhibits little bleeding between colors, while its color clearness is poor and its long-term storage stability is weak compared to dyestuff-type ink. Also, images printed using pigment-type inks have weak dry and wet rub fastnesses. Further, when printing in colors (multicolor printing) with dyestuffs or pigments, bleeding at interfaces of each color occurs, and thus clearness of images is weakened.

U.S. Patent Nos. 5,172,133 and 5,529,616 disclose ink compositions for inkjet printing including a pigment, a water-soluble resin and a specific alcohol to improve rub fastness and color fastness by decreasing mobility of a coloring agent on receptors such as paper. However, the ink compositions for inkjet printing are ejected through nozzles, and thus should have a low viscosity. The amount of polymer binder used in the ink composition is limited. Thus, the amount of polymer binder used cannot sufficiently bind pigment particles to the top of a receptor, thereby providing unsatisfactory rub fastness and color fastness. U.S. Patent No. 6,946,023 discloses an ink composition including glycol and amine (pyrrolidone) to improve smearing. Although, mobility of the coloring agent is decreased using glycol, the effect of improving rub fastness is insignificant.

As another approach to improve rub fastness and color fastness by decreasing mobility of a coloring agent on receptors, a method of chelating metal ions is disclosed in U.S. Patent No. 4,694,302, a method using a reaction of cations and anions is disclosed in U.S. Patent No. 5,623,294, and a method using a polymer reaction is disclosed in U.S. Patent No. 5, 629,359. However, the method of chelating metal ions has difficulty in obtaining long-term storage stability due to a reaction of each ink constituent and metal ions contained in an ink. The method of using a reaction of cations and anions also has poor performance due to a reaction of a substrate and the ions as well as a reaction of ink constituents. Also, the method of using a polymer reaction has an environmental effect due to an unreacted monomer, and a further need for a curing apparatus and curing time, in addition to the difficulty in obtaining long-term storage stability.

Suitably, an aim of the present invention is to provide an ink composition, a multicolor ink set, an ink cartridge for an inkjet recording apparatus, and an inkjet recording apparatus, typically featuring (a) good and/or useful and/or beneficial propert(y)ies, and/or preferably addressing at least one or some of the problems or concerns noted above, elsewhere herein, or in the art.

A further aim of the present invention is to provide an alternative ink composition, multicolor ink set, ink cartridge for an inkjet recording apparatus, and inkjet recording apparatus, to those already known.

A further aim of the present invention or embodiments thereof is to provide an ink composition, a multicolor ink set, an ink cartridge for an inkjet recording apparatus, and an inkjet recording apparatus, with a desirable property or properties.

A further and preferred aim of embodiments of the invention is to provide an improved ink composition, multicolor ink set, ink cartridge for an inkjet recording apparatus, and inkjet recording apparatus, preferably with certain advantageous properties.

A further preferred aim of the invention or embodiments thereof is to provide an ink composition, multicolor ink set, ink cartridge for an inkjet recording apparatus, and inkjet recording apparatus, having an improved property or improved properties compared to those of the prior art.

Other aims and/or advantages of the invention will be set forth in part in the description herein and, in part, will be obvious from the description, or may be learned by practice of the invention.

According to the present invention there is provided an ink composition, multicolor ink set, ink cartridge for an inkjet recording apparatus, and inkjet recording apparatus, as set forth in the appended claims. Preferred features of the invention will be apparent from the dependent claims, and the description which follows.

According to an aspect of the present invention, there is provided an ink composition including:

an oxylate-based compound represented by Formula 1 below;
an amide compound represented by Formula 2 below;
a coloring agent; and
a solvent.

Formula 1 $Z_{4-n}C(R_1)_n$

Here, Z is

$$-\!\left(O-R_2\right)_x\!-\!\left(O-R_3\right)_y\!-OH,$$

where $R_2$ and $R_3$ are each independently a bond, a substituted or unsubstituted $C_2$-$C_{20}$ alkylene group, a substituted or unsubstituted $C_2$-$C_{20}$ heteroalkylene group, a substituted or unsubstituted $C_6$-$C_{30}$ arylene group, a substituted or unsubstituted $C_6$-$C_{30}$ heteroarylene group, a substituted or unsubstituted $C_2$-$C_{20}$ alkenylene group, a substituted or unsubstituted $C_2$-$C_{20}$ heteroalkenylene group, a substituted or unsubstituted $C_5$-$C_{30}$ cycloakylene group, a substituted or unsubstituted $C_7$-$C_{30}$ aralkylene group, a carbonyl group or a carboxy group; and x and y are each independently 0 or an integer from 1 to 40;
$R_1$ is a hydrogen atom, a halogen atom, a hydroxyl group, an amino group, a nitro group, a cyano group, a substituted or unsubstituted $C_1$-$C_{20}$ alkyl group, a substituted or unsubstituted $C_2$-$C_{20}$ alkenyl group, a substituted or unsubstituted $C_1$-$C_{20}$ alkoxy group, a substituted or unsubstituted $C_1$-$C_{20}$ alkylsulfoneamide group, a substituted or unsubstituted $C_6$-$C_{20}$ arylsulfoneamide group, a substituted or unsubstituted $C_1$-$C_{20}$ acylamino group, a $C_1$-$C_{20}$ alkylureido group, a $C_6$-$C_{20}$ arylureido group, a $C_2$-$C_{20}$ alkoxycarbonyl group, a $C_2$-$C_{20}$ alkoxycarbonylamino group, a carbamoyl group, a sulfamoyl group, a sulfo group and a salt thereof, a carboxy group and a salt thereof, a substituted or unsubstituted $C_2$-$C_{20}$ hydroxyalkyloxyalkyl group, a substituted or unsubstituted $C_3$-$C_{20}$ dialkylaminoalkyl group, a substituted or unsubstituted $C_6$-$C_{20}$ pyridylalkyl group, a substituted or unsubstituted $C_5$-$C_{20}$ pyridyl group, a substituted or unsubstituted $C_6$-$C_{20}$ imidazolyl group, a hydrazine group, a hydrozone group, a substituted or unsubstituted $C_5$-$C_{30}$ cycloalkyl group, a substituted or unsubstituted $C_6$-$C_{30}$ aryl group, a substituted or unsubstituted $C_7$-$C_{30}$ arylalkyl group, a substituted or unsubstituted $C_1$-$C_{20}$ heteroalkyl group, a substituted or unsubstituted $C_2$-$C_{20}$ heteroalkenylene group, a substituted or unsubstituted $C_5$-$C_{20}$ heteroaryl group, a substituted or unsubstituted $C_6$-$C_{20}$ heteroarylalkyl group, a substituted or unsubstituted $C_6$-$C_{20}$ heteroarylalkenyl group, or a substituted or unsubstituted $C_3$-$C_{20}$ heterocycloalkyl group; and
n is 0 or an integer from 1 to 3.

Formula 2

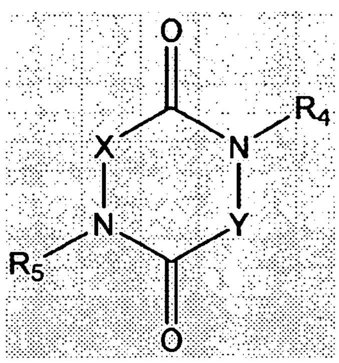

Here, X and Y are each independently a bond, a substituted or unsubstituted $C_1$-$C_8$ alkylene group, a substituted or unsubstituted $C_1$-$C_8$ heteroalkylene group, a substituted or unsubstituted $C_2$-$C_8$ alkenylene group, a substituted or unsubstituted $C_2$-$C_8$ heteroalkenylene group, a carbonyl group, a carboxy group, -O-, -S-, or -NH-; and
$R_4$ and $R_5$ are each independently a hydrogen atom, a halogen atom, a hydroxyl group, an amino group, a nitro group, a cyano group, a substituted or unsubstituted $C_1$-$C_{20}$ alkyl group, a substituted or unsubstituted $C_2$-$C_{20}$ alkenyl group, a substituted or unsubstituted $C_1$-$C_{20}$ alkoxy group, a substituted or unsubstituted $C_1$-$C_{20}$ alkylsulfoneamide group, a

substituted or unsubstituted $C_6$-$C_{20}$ arylsulfoneamide group, a substituted or unsubstituted $C_1$-$C_{20}$ acylamino group, a $C_1$-$C_{20}$ alkylureido group, a $C_6$-$C_{20}$ arylureido group, a $C_2$-$C_{20}$ alkoxycarbonyl group, a $C_2$-$C_{20}$ alkoxycarbonylamino group, a carbamoyl group, a sulfamoyl group, a sulfo group and a salt thereof, a carboxy group and a salt thereof, a substituted or unsubstituted $C_2$-$C_{20}$ hydroxyalkyloxyalkyl group, a substituted or unsubstituted $C_3$-$C_{20}$ dialkylaminoalkyl group, a substituted or unsubstituted $C_6$-$C_{20}$ pyridylalkyl group, a substituted or unsubstituted $C_5$-$C_{20}$ pyridyl group, a substituted or unsubstituted $C_6$-$C_{20}$ imidazolyl group, a hydrazine group, a hydrozone group, a substituted or unsubstituted $C_5$-$C_{30}$ cycloalkyl group, a substituted or unsubstituted $C_6$-$C_{30}$ aryl group, a substituted or unsubstituted $C_7$-$C_{30}$ arylalkyl group, a substituted or unsubstituted $C_1$-$C_{20}$ heteroalkyl group, a substituted or unsubstituted $C_2$-$C_{20}$ heteroalkenylene group, a substituted or unsubstituted $C_5$-$C_{20}$ heteroaryl group, a substituted or unsubstituted $C_6$-$C_{20}$ heteroarylalkyl group, a substituted or unsubstituted $C_6$-$C_{20}$ heteroarylalkenyl group, or a substituted or unsubstituted $C_3$-$C_{20}$ heterocycloalkyl group; or $R_4$ is connected to Y to form a ring group, a fusion ring group, or a double bond, and $R_5$ is connected to X to form a ring group, a fusion ring group, or a double bond.

Advantageously, the present invention provides an ink composition in which the quality of a printed image is improved by improving colorfastness such as rubfastness and bleeding resistance.

According to another aspect of the present invention, a multicolor ink set is provided that includes at least two ink compositions prepared according to one embodiment of the present invention.

In a further aspect of the present invention there is provided a multicolour ink set comprising at least one ink composition according to the first aspect described herein.

According to another aspect of the present invention, an ink cartridge is provided for an inkjet recording apparatus including the multicolor ink set prepared according to one embodiment of the present invention.

In a further aspect of the present invention there is provided an ink cartridge for an inkjet recording apparatus comprising the multicolor ink set described herein.

According to another aspect of the present invention, an inkjet recording apparatus is provided comprising the ink cartridge prepared according to the current embodiment of the present invention.

In a further aspect of the present invention there is provided an inkjet recording apparatus comprising the ink cartridge described herein.

These and other aspects of the invention will become apparent from the following detailed description of the invention which disclose various embodiments of the invention.

Where applicable, features and embodiments of any aspects of the present invention, as described herein, may be regarded as preferred features and embodiments of the other aspects of the present invention.

## BRIEF DESCRIPTION OF THE DRAWINGS

The above and other features and advantages of the present invention will become more apparent by describing in detail exemplary embodiments thereof with reference to the attached drawings in which:

FIG. 1 is a perspective view of an inkjet recording apparatus including an ink cartridge having an ink composition according to an embodiment of the present invention; and

FIG. 2 is a cross-sectional view of an ink cartridge having an ink composition, according to an embodiment of the present invention.

The attached diagrammatic drawings will help to provide a better understanding of the invention.

Hereinafter, the present invention will now be described more fully with reference to the accompanying drawings, in which exemplary embodiments of the invention are shown. The invention may, however, be embodied in many different forms and should not be construed as being limited to the embodiments set forth herein. Rather, these embodiments are provided so that this disclosure will be thorough and complete, and will fully convey the concept of the invention to those skilled in the art.

According to an embodiment of the present invention, an ink composition includes:

an oxylate-based compound represented by Formula 1 below;
an amide compound represented by Formula 2 below;
a coloring agent; and
a solvent.

Formula 1 $Z_{4-n}C(R_1)_n$

Here, Z is

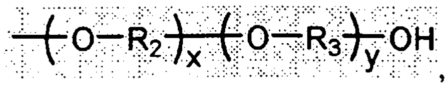

where $R_2$ and $R_3$ are each independently a bond, a substituted or unsubstituted $C_2$-$C_{20}$ alkylene group, a substituted or unsubstituted $C_2$-$C_{20}$ heteroalkylene group, a substituted or unsubstituted $C_6$-$C_{30}$ arylene group, a substituted or unsubstituted $C_6$-$C_{30}$ heteroarylene group, a substituted or unsubstituted $C_2$-$C_{20}$ alkenylene group, a substituted or unsubstituted $C_2$-$C_{20}$ heteroalkenylene group, a substituted or unsubstituted $C_5$-$C_{30}$ cycloakylene group, a substituted or unsubstituted $C_7$-$C_{30}$ aralkylene group, a carbonyl group or a carboxy group; and x and y are each independently 0 or an integer from 1 to 40;

$R_1$ is a hydrogen atom, a halogen atom, a hydroxyl group, an amino group, a nitro group, a cyano group, a substituted or unsubstituted $C_1$-$C_{20}$ alkyl group, a substituted or unsubstituted $C_2$-$C_{20}$ alkenyl group, a substituted or unsubstituted $C_1$-$C_{20}$ alkoxy group, a substituted or unsubstituted $C_1$-$C_{20}$ alkylsulfoneamide group, a substituted or unsubstituted $C_6$-$C_{20}$ arylsulfoneamide group, a substituted or unsubstituted $C_1$-$C_{20}$ acylamino group, a $C_1$-$C_{20}$ alkylureido group, a $C_6$-$C_{20}$ arylureido group, a $C_2$-$C_{20}$ alkoxycarbonyl group, a $C_2$-$C_{20}$ alkoxycarbonylamino group, a carbamoyl group, a sulfamoyl group, a sulfo group and a salt thereof, a carboxy group and a salt thereof, a substituted or unsubstituted $C_2$-$C_{20}$ hydroxyalkyloxyalkyl group, a substituted or unsubstituted $C_3$-$C_{20}$ dialkylaminoalkyl group, a substituted or unsubstituted $C_6$-$C_{20}$ pyridylalkyl group, a substituted or unsubstituted $C_5$-$C_{20}$ pyridyl group, a substituted or unsubstituted $C_6$-$C_{20}$ imidazolyl group, a hydrazine group, a hydrozone group, a substituted or unsubstituted $C_5$-$C_{30}$ cycloalkyl group, a substituted or unsubstituted $C_6$-$C_{30}$ aryl group, a substituted or unsubstituted $C_7$-$C_{30}$ arylalkyl group, a substituted or unsubstituted $C_1$-$C_{20}$ heteroalkyl group, a substituted or unsubstituted $C_2$-$C_{20}$ heteroalkenylene group, a substituted or unsubstituted $C_5$-$C_{20}$ heteroaryl group, a substituted or unsubstituted $C_6$-$C_{20}$ heteroarylalkyl group, a substituted or unsubstituted $C_6$-$C_{20}$ heteroarylalkenyl group, or a substituted or unsubstituted $C_3$-$C_{20}$ heterocycloalkyl group; and

n is 0 or an integer from 1 to 3.

Formula 2

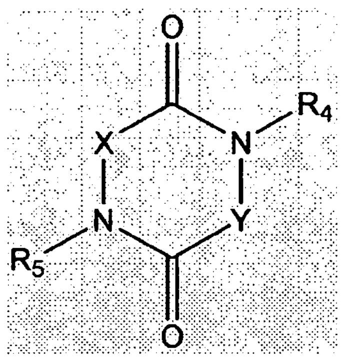

Here, X and Y are each independently a bond, a substituted or unsubstituted $C_1$-$C_8$ alkylene group, a substituted or unsubstituted $C_1$-$C_8$ heteroalkylene group, a substituted or unsubstituted $C_2$-$C_8$ alkenylene group, a substituted or unsubstituted $C_2$-$C_8$ heteroalkenylene group, a carbonyl group, a carboxy group, -O-, -S-, or -NH-; and

$R_4$ and $R_5$ are each independently a hydrogen atom, a halogen atom, a hydroxyl group, an amino group, a nitro group, a cyano group, a substituted or unsubstituted $C_1$-$C_{20}$ alkyl group, a substituted or unsubstituted $C_2$-$C_{20}$ alkenyl group, a substituted or unsubstituted $C_1$-$C_{20}$ alkoxy group, a substituted or unsubstituted $C_1$-$C_{20}$ alkylsulfoneamide group, a substituted or unsubstituted $C_6$-$C_{20}$ arylsulfoneamide group, a substituted or unsubstituted $C_1$-$C_{20}$ acylamino group, a $C_1$-$C_{20}$ alkylureido group, a $C_6$-$C_{20}$ arylureido group, a $C_2$-$C_{20}$ alkoxycarbonyl group, a $C_2$-$C_{20}$ alkoxycarbonylamino group, a carbamoyl group, a sulfamoyl group, a sulfo group and a salt thereof, a carboxy group and a salt thereof, a substituted or unsubstituted $C_2$-$C_{20}$ hydroxyalkyloxyalkyl group, a substituted or unsubstituted $C_3$-$C_{20}$ dialkylaminoalkyl group, a substituted or unsubstituted $C_6$-$C_{20}$ pyridylalkyl group, a substituted or unsubstituted $C_5$-$C_{20}$ pyridyl group, a substituted or unsubstituted $C_6$-$C_{20}$ imidazolyl group, a hydrazine group, a hydrozone group, a substituted or unsubstituted $C_5$-$C_{30}$ cycloalkyl group, a substituted or unsubstituted $C_6$-$C_{30}$ aryl group, a substituted or unsubstituted $C_7$-$C_{30}$

arylalkyl group, a substituted or unsubstituted $C_1$-$C_{20}$ heteroalkyl group, a substituted or unsubstituted $C_2$-$C_{20}$ heteroalkenylene group, a substituted or unsubstituted $C_5$-$C_{20}$ heteroaryl group, a substituted or unsubstituted $C_6$-$C_{20}$ heteroarylalkyl group, a substituted or unsubstituted $C_6$-$C_{20}$ heteroarylalkenyl group, or a substituted or unsubstituted $C_3$-$C_{20}$ heterocycloalkyl group; or $R_4$ is connected to Y to form a ring group, a fusion ring group, or a double bond, and $R_5$ is connected to X to form a ring group, a fusion ring group, or a double bond.

When the ink composition according to the current embodiment of the present invention includes the oxylate-based compound represented by Formula 1, the oxylate-based compound strongly binds with cellulose, a paper constituent, whereby ink cannot permeate into the paper while printing is performed on the paper since the oxylate-based compound has a radial structure instead of a linear structure. As a result, a coloring agent included in the ink composition is prevented from permeating into the paper, and thus high optical density (OD) can be maintained. In addition, the oxylate-based compound represented by Formula 1 having a radial structure is displaced on the surface of the paper, and has a hydroxyl group (-OH) in a terminal portion thereof to increase the interaction with a coloring agent through hydrogen binding. As a result, the coloring agent can be adhered to a surface of the paper, thereby improving durability such as rub fastness and bleeding resistance by reducing mobility of the coloring agent on the surface of paper.

The amide compound represented by Formula 2 can have resonance structures which are easily charged due to its high polarity. That is, since the amide compound represented by Formula 2 has two amide groups, the amide compound has anionic properties in an oxygen atom and delocalized cationic properties in a carbon atom and a nitrogen atom which are adjacent to the oxygen atom. Such delocalized cations electrostatically bind with anions on the surface of pigments and paper. As a result, durability and bleeding resistance can be improved by reducing mobility of the coloring agent on the surface of the paper. In particular, the amide compound represented by Formula 2 according to an embodiment of the present invention has two amide groups, and thus sufficient delocalized cations can form electrostatically stronger bonds with anions on the surface of pigments and paper.

When the ink composition according to the current embodiment of the present invention includes a polyhydric alcohol, the anionic oxygen atom in the resonance structure of the amide compound binds with the hydroxyl group in the polyhydric alcohol through hydrogen binding to be stabilized, and thus the anionic properties of the amide compound can be maintained. As the anionic properties are maintained, the cationic properties of the nitrogen and carbon atoms in the amide compound are maintained, and thus the effect on reducing mobility of pigments on the surface of paper can be improved.

Examples of the oxylate-based compound represented by Formula 1 may include glycerol propoxylate, trimethylpropane propoxylate, pentaerythritol propoxylate, pentaerythritol ethoxylate, glycerol ethoxylate, trimethylpropane ethoxylate, bisphenol A propoxylate, neopentyl glycol propoxylate, neopentyl glycol ethoxylate, pentaerythritol propoxylate /ethoxylate and a mixture thereof, but are not limited thereto.

The ink composition according to the current embodiment of the present invention may preferably include about 0.1-20 parts by weight, and more preferably about 1-10 parts by weight, of the oxylate-based compound represented by Formula 1 based on 100 parts by weight of the ink composition. When the amount of the oxylate-based compound represented by Formula 1 is less than 0.1 parts by weight, the ink can permeate deep into the paper, and thus, high optical density cannot be obtained. Further, the interaction with the coloring agent through hydrogen bonding is decreased, mobility is increased, and thus durability can decrease. On the other hand, when the amount of the oxylate-based compound represented by Formula 1 is greater than 20 parts by weight, solubility of the coloring agent may decrease.

Examples of the amide compound represented by Formula 2 may include 1H-pyrimidine-2,4-dione represented by Formula 3, dihydro-pyrimidine-2,4-dione represented by Formula 4, piperazine-2,5-dione represented by Formula 5, imidazolidine-2,4-dione represented by Formula 6, 5-methyl-imidazolidine-2,4-dione represented by Formula 7, 1-methylimidazolidine-2,4-dione represented by Formula 8, and mixtures thereof, but are not limited thereto.

Formula 3

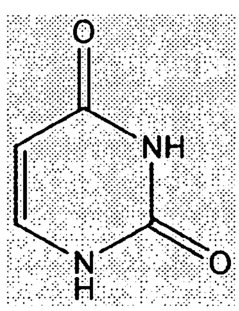

Formula 4

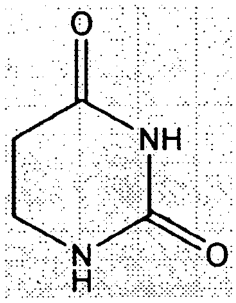

Formula 5

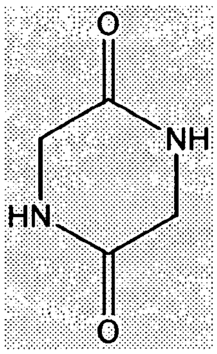

Formula 6

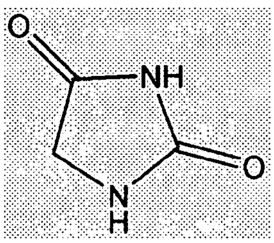

Formula 7

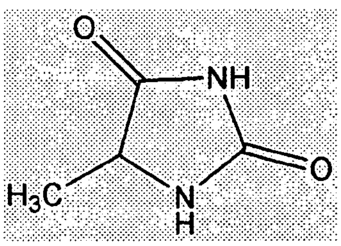

Formula 8

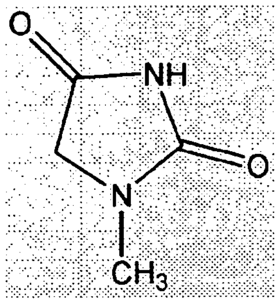

The ink composition according to the current embodiment of the present invention may preferably include about 0.1-20 parts by weight, and more preferably about 1-10 parts by weight, of the amide compound represented by Formula 2 based on 100 parts by weight of the ink composition. When the amount of the amide compound represented by Formula 2 is less than 0.1 parts by weight, mobility of the coloring agent on the surface of paper is increased, and thus durability and bleeding resistance are decreased. On the other hand, when the amount of the amide compound represented by Formula 2 is greater than 20 parts by weight, the viscosity is increased and ejecting efficiency can be decreased.

The coloring agent that is used in the ink composition may be dyestuffs and pigments, and any coloring agent that is commonly used in the art can be used without limitation. Coloring agents that can be used include dyestuffs which can be dissolved and dispersed in water, pigments which can be stably dispersed in water with a dispersing agent, self-dispersing pigments which can be stably dispersed in water without the dispersing agent, and mixtures thereof.

Examples of the dyestuffs in the coloring agent may include food black dyes, food red dyes, food yellow dyes, food blue dyes, acid black dyes, acid red dyes, acid blue dyes, acid yellow dyes, direct black dyes, direct blue dyes, direct yellow dyes, anthraquinone dyes, monoazo dyes, diazo dyes, and phthalocyanine derivatives, but are not limited thereto. Examples of the pigments in the coloring agent may include carbon black, graphite, vitreous carbon, activated charcoal, activated carbon, anthraquinone, phthalocyanine blue, phthalocyaniene green, diazos, monoazos, pyranthrones, perylene, quinacridone, and indigoid pigments, and examples of self-dispersing pigments may include cabojet-series, CW-series of Orient Chemical, but are not limited thereto.

The amount of the coloring agent may preferably be about 0.1-15 parts by weight, and more preferably about 1-10 parts by weight based on 100 parts by weight of the ink composition. When the amount of the coloring agent is less than 0.1 parts by weight, the coloring property is not good. On the other hand, when the amount of the coloring agent is greater than 20 parts by weight, costs for manufacturing the ink composition may be increased.

The solvent may be a water-based solvent and may further include at least one organic solvent. The amount of solvent may preferably be about 70-90 parts by weight based on 100 parts by weight of the ink composition. When the amount of the solvent is less than 70 parts by weight, viscosity of the ink composition is increased too high and ejecting efficiency can be decreased. On the other hand, when the amount of the solvent is greater than 90 parts by weight, surface tension of the ink composition is increased and thus ejecting efficiency can be decreased.

The organic solvent that is included in the solvent may include at least one solvent selected from the group consisting of an alcohol, a ketone, an ester, a polyhydric alcohol, a nitrogen-containing compound, and a sulfur-containing compound such as dimethyl sulfoxide, tetramethyl sulfone, or thioglycol.

The organic solvent can be an alcohol such as methyl alcohol, ethyl alcohol, n-propyl alcohol, isopropyl alcohol, n-butyl alcohol, sec-butyl alcohol, t-butyl alcohol and isobutyl alcohol; a ketone such as acetone, methylethylketone, diethylketone, and diacetone alcohol; an ester such as methyl acetate, ethyl acetate, and ethyl lactate; and a polyhydric alcohol such as ethylene glycol, diethylene glycol, triethylene glycol, propylene glycol, butylene glycol, 1,4-buthandiol, 1,2,4-buthantriol, 1.5-pentanediol, 1,2,6-hexanetriol, hexylene glycol, glycerol, glycerol ethoxylate and trimethylpropane ethoxylate.

A monohydric alcohol that is used as an organic solvent controls surface tension of the ink, and thus can improve permeation and dot formation properties in a recording medium such as paper for professional or nonprofessional use and drying properties of the printed image. A polyhydric alcohol and its derivatives are not easily evaporated, and lower the freezing point of the ink, and thus can improve storage stability of the ink to prevent nozzles from being blocked.

Examples of the nitrogen-containing compound that is included in the organic solvent may include 2-pyrrolidone and N-methyl-2-pyrrolidone, and examples of the sulfur-containing compound may include dimethyl sulfoxide, tetramethyl sulfone, and thioglycol.

When the organic solvent is used together with the water-based solvent, the amount of the organic solvent may preferably be about 0.1-130 parts by weight based on 100 parts by weight of water. When the amount of the organic

solvent is less than 0.1 parts by weight, the ink is so quickly evaporated that the stability of the ink may be decreased. When the amount of the solvent is greater than 130 parts by weight, the viscosity of the ink composition is increased too high and ejecting efficiency can be decreased.

The ink composition according to the current embodiment of the present invention may further include various additives to improve properties of the ink composition. More particularly, the ink composition may include at least one component selected from the group consisting of a wetting agent, a dispersing agent, a surfactant, a viscosity modifier, a pH regulator, and an antioxidizing agent. The amount of the additives may be about 0.1-20 parts by weight, more preferably about 0.1-10 parts by weight, based on 100 parts by weight of the ink composition.

To obtain optimized conditions for the ink composition according to the current embodiment of the present invention, the surface tension of the ink composition may preferably be about 15-70 dyne/cm at 20˚C, and more preferably about 25-55 dyne/cm. The viscosity of the ink composition may preferably be about 1.5-20 cps, and more preferably about 1.5-3.5 cps.

A multicolor ink set including at least two ink compositions prepared according to the current embodiment of the present invention can be prepared. The multicolor ink set can be used in an ink receiving unit of an inkjet recording apparatus or an ink cartridge for an inkjet printer.

An inkjet recording apparatus according to an embodiment of the present invention may include a thermal head from which ink droplets are ejected by vapor pressure obtained from heating the ink composition, a piezo head from which ink droplets are ejected by a piezo device, a disposable head or a permanent head. In addition, the inkjet recording apparatus can be a scanning type printer or an array type printer, and can be used for a desktop, textile and industrial purpose. These properties of the inkjet recording apparatus are described for illustrative purposes only, and the use of the inkjet recording apparatus is not limited thereto.

The substituents that are used in the present invention may be defined as follows.

The term "alkyl" indicates a saturated, monovalent, straight or branched hydrocarbon group having about 1-20 carbon atoms, preferably about 1-10 carbon atoms, and more preferably about 1-6 carbon atoms. The alkyl group can be arbitrarily substituted with at least one halogen substituent. Examples of the alkyl group may include a methyl group, an ethyl group, a propyl group, a 2-propyl group, an n-butyl group, an iso-butyl group, a tert-butyl group, a pentyl group, a hexyl group, a dodecyl group, a fluoromethyl group, a difluoromethyl group, a trifluoromethyl group, a chloromethyl group, a dichloromethyl group, a trichloromethyl group, an iodomethyl group, and a bromomethyl group.

The term "alkenyl" indicates a monovalent, straight or branched hydrocarbon group having one or more carbon-carbon double bonds therein and about 2-20 carbon atoms, preferably about 2-10 carbon atoms, and more preferably about 2-6 carbon atoms. The alkenyl group can bind with a main chain through a carbon atom in the carbon-carbon double bonds or a saturated carbon atom. The alkenyl group can be arbitrarily substituted with at least one halogen substituent. Examples of the alkenyl group may include an ethenyl group, a 1-propenyl group, a 2-propenyl group, a 2-butenyl group, a 3-butenyl group, a pentenyl group, a 5-hexenyl group, and a dodecenyl group.

The term "cycloalkyl" indicates a carbocyclic, saturated or unsaturated, non-aromatic, monovalent, monocyclic, bicyclic, or tricyclic hydrocarbon group having about 5-30 carbon atoms. The cycloalkyl group can be arbitrarily substituted with at least one halogen substituent. Examples of the cycloalkyl group may include a cyclopropyl group, a cyclobutyl group, a cyclopentyl group, a cyclopentenyl group, a cyclohexyl group, a cyclohexenyl group, a cycloheptyl group, a cyclooctyl group, a decahydronaphthalenyl group, an adamantyl, and a norbornyl (i.e., bicyclo [2. 2.1] hept-5-enyl.

The term "aryl" indicates a carbocyclic, monovalent, monocyclic, bicyclic, or tricyclic aromatic hydrocarbon group having about 6-30 carbon atoms, and preferably about 6-18 carbon atoms. The aryl group can be arbitrarily substituted with at least one halogen substituent. The aromatic portion of the aryl group only includes carbon atoms. Examples of the aryl group may include a phenyl group, a naphthalenyl group, and a fluorenyl group.

The term "aralkyl" indicates an alkyl group, wherein at least one hydrogen atom of the alkyl group is substituted with an aryl group, and the aralkyl group can be arbitrarily substituted with at least one halogen substituent. Examples of the aralkyl group may include a benzyl group, a benzhydryl group, and a trityl group.

The term "alkynyl" indicates a monovalent straight or branched hydrocarbon group having one or more carbon-carbon triple bonds and about 2-20 carbon atoms, and preferably about 2-10 carbon atoms, and more preferably about 2-6 carbon atoms. The alkynyl group can bind with a main chain through a carbon atom in the carbon-carbon triple bonds or a saturated carbon atom. The alkynyl group can be arbitrarily substituted with at least one halogen substituent. Examples of the alkynyl group may include an ethynyl group and a propynyl group.

The term "alkylene" indicates a saturated, divalent, straight or branched hydrocarbon group having about 1-20 carbon atoms, preferably about 1-10 carbon atoms, and more preferably about 1-6 carbon atoms. The alkylene group can be arbitrarily substituted with at least one halogen substituent. Examples of the alkyl group may include a methylene group, an ethylene group, a propylene group, a butylene group, and a hexylene group.

The term "alkenylene" indicates a bivalent straight or branched hydrocarbon group having one or more carbon-carbon double bonds and about 2-20 carbon atoms, preferably about 2-10 carbon atoms, and more preferably about 2-6 carbon atoms. The alkenylene group can bind with a main chain through a carbon atom in the carbon-carbon double

bonds or a saturated carbon atom. The alkenylene group can be arbitrarily substituted with at least one halogen substituent.

The term "cycloalkylene" indicates a carbocyclic, saturated or unsaturated, non-aromatic, bivalent, monocyclic, bicyclic, or tricyclic hydrocarbon group having about 5-30 carbon atoms. The cycloalkylene group can be arbitrarily substituted with at least one halogen substituent. Examples of the cycloalkylene group may include a cyclopropylene group and a cyclobutylene group.

The term "arylene" indicates a carbocyclic, bivalent, monocyclic, bicyclic, or tricyclic aromatic hydrocarbon group having about 6-30 carbon atoms, and preferably about 6-18 carbon atoms. The arylene group can be arbitrarily substituted with at least one halogen substituent. Example of the arylene group may include a phenylene group.

The term "aralkylene" indicates a bivalent group, wherein at least one hydrogen atom of the alkyl group is substituted with an aryl group, and the aralkylene group can be arbitrarily substituted with at least one halogen substituent. Examples of the aralkylene may include a benzylene group.

The term "alkynylene" indicates a bivalent straight or branched hydrocarbon group having one or more carbon-carbon triple bonds and about 2-20 carbon atoms, and preferably about 2-10 carbon atoms, and more preferably about 2-6 carbon atoms. The alkynylene group can bind with a main chain through a carbon atom in the carbon-carbon triple bonds or a saturated carbon atom. The alkynylene group can be arbitrarily substituted with at least one halogen substituent. Examples of the alkynylene group may include an ethynylene group and a propynylene group.

The term "heteroalkyl" indicates an alkyl group, wherein at least one carbon atom in the main chain of the alkyl group is substituted with a hetero atom such as nitrogen, sulfur, oxygen, or phosphorous.

The term "heteroaryl" indicates an aryl group, wherein at least one carbon in the ring of the aryl group is substituted with a hetero atom such as nitrogen, sulfur, oxygen, or phosphorous.

The term "a bond" indicates a chemical linkage simply connected by a chemical bond without any substituent.

FIG. 1 is a perspective view of an inkjet recording apparatus according to an embodiment of the present invention.

Referring to FIG. 1, the inkjet recording apparatus includes an ink cartridge 11 having an ink composition that contains a colorant and pseudo-colorant additives. A printer cover 8 is connected to a main body 13 of a printer in FIG. 1. An engaging portion of a movable latch 10 protrudes through a hole 7. The movable latch 10 engages with a fixed latch 9 that is coupled to an inner side of the printer cover 8 when the printer cover 8 is closed. The printer cover 8 has a recess 14 in a region corresponding to the engaging portion of the movable latch 10 protruding through the hole 7. The ink cartridge 11 is positioned such that ink can be ejected onto paper 3 that passes under the ink cartridge 11.

FIG. 2 is a cross-sectional view of an ink cartridge 100 for an inkjet printer having an ink composition, according to an embodiment of the present invention. Referring to FIG. 2, the ink cartridge 100 for the inkjet printer includes an ink cartridge main body 110 including an ink storage tank 112, an inner cover 114 covering a top portion of the ink storage tank 112, and an outer cover 116 that is separated by a predetermined gap from the inner cover 114 in order to encapsulate the ink storage tank 112 and the inner cover 114.

The ink storage tank 112 is divided into a first chamber 124 and a second chamber 126 including a sponge 129 by a vertical barrier wall 123. An ink path 128 between the first chamber 124 and the second chamber 126 is formed in a bottom portion of the vertical barrier wall 123. The first chamber 124, the sponge 129, and the second chamber 126 are filled with ink. A vent hole 126A in the inner cover 114 is aligned with the second chamber 126.

In addition, a filter 140 is disposed in a lower portion of the second chamber 126, so that ink impurities and fine bubbles are filtered to prevent ejection holes of a printer head 130 from being blocked. A hook 142 is formed in the edge of the filter 140 and is coupled to a top portion of a standpipe 132. Thus, ink is ejected from the ink storage tank 112 onto a printing medium in a liquid-drop form through the ejection holes of the printer head 130.

Hereinafter, the present invention will be described in greater detail with reference to the following examples. The following examples are for illustrative purposes only and are not intended to limit the scope of the invention.

Preparation of ink compositions

A coloring agent, water, an organic solvent, and additives were mixed as follows and the mixtures were sufficiently stirred in a stirrer for more than 30 minutes to prepare uniform mixtures. Then the mixtures were passed through a 0.45 $\mu$m filter to prepare ink compositions.

Example 1

| | |
|---|---|
| Raven 5250 (manufactured by Columbian Co.) | 4.5 parts by weight |
| Glycerol | 7.5 parts by weight |

(continued)

| | |
|---|---|
| Diethylene glycol | 8.0 parts by weight |
| Glycerol propoxylate | 4.0 parts by weight |
| 1H-pyrimidine-2,4-dione | 4.0 parts by weight |
| Water (deionized water) | 72.0 parts by weight |

Example 2

| | |
|---|---|
| Regal 330 (manufactured by Cabot Co.) | 4.5 parts by weight |
| Glycerol | 7.5 parts by weight |
| Diethylene glycol | 8.0 parts by weight |
| Trimethylolpropane propoxylate | 4.0 parts by weight |
| Dihydro-pyrimidine-2,4-dione | 4.0 parts by weight |
| Water (deionized water) | 72.0 parts by weight |

Example 3

| | |
|---|---|
| Basacid Rot 495 (manufactured by BASF) | 4.5 parts by weight |
| Glycerol | 7.5 parts by weight |
| Diethylene glycol | 8.0 parts by weight |
| Pentaerythritol propoxylate | 4.0 parts by weight |
| Piperazine-2,5-dione | 4.0 parts by weight |
| Water (deionized water) | 72.0 parts by weight |

Example 4

| | |
|---|---|
| Yellow GGN (manufactured by Spectra) | 4.5 parts by weight |
| Glycerol | 7.5 parts by weight |
| Diethylene glycol | 8.0 parts by weight |
| Pentaerythritol propoxylate/ethoxylate | 4.0 parts by weight |
| 1-imidazolidine-2,4-dione | 4.0 parts by weight |
| Water (deionized water) | 72.0 parts by weight |

Example 5

| | |
|---|---|
| Basacid Rot 495 (manufactured by BASF) | 4.5 parts by weight |
| Glycerol | 7.5 parts by weight |
| Diethylene glycol | 8.0 parts by weight |
| Pentaerythritol propoxylate | 4.0 parts by weight |
| 5-methyl-imidazolidine-2,4-dione | 4.0 parts by weight |
| Water (deionized water) | 72.0 parts by weight |

Example 6

| | |
|---|---|
| Basacid Rot 495 (manufactured by BASF) | 4.5 parts by weight |
| Glycerol | 7.5 parts by weight |
| Diethylene glycol | 8.0 parts by weight |
| Pentaerythritol propoxylate | 4.0 parts by weight |
| 1-methyl-imidazolidine-2,4-dione | 4.0 parts by weight |
| Water (deionized water) | 72.0 parts by weight |

Comparative Example 1

| | |
|---|---|
| Raven 5250 (manufactured by Columbian Co.) | 4.5 parts by weight |
| Glycerol | 7.5 parts by weight |
| Diethylene glycol | 8.0 parts by weight |
| Water (deionized water) | 80.0 parts by weight |

Comparative Example 2

| | |
|---|---|
| Regal 330 (manufactured by Cabot Co.) | 4.5 parts by weight |
| Glycerol | 7.5 parts by weight |
| Diethylene glycol | 8.0 parts by weight |
| Water (deionized water) | 80.0 parts by weight |

Comparative Example 3

| | |
|---|---|
| Basacid Rot 495 (manufactured by BASF) | 4.5 parts by weight |
| Glycerol | 7.5 parts by weight |
| Diethylene glycol | 8.0 parts by weight |
| Water (deionized water) | 80.0 parts by weight |

Comparative Example 4

| | |
|---|---|
| Yellow GGN (manufactured by Spectra) | 4.5 parts by weight |
| Glycerol | 7.5 parts by weight |
| Diethylene glycol | 8.0 parts by weight |
| Water (deionized water) | 80.0 parts by weight |

Test of rub fastness

The ink compositions prepared according to Examples 1-6 and Comparative Examples 1-4 were refilled into ink cartridges M-50 (manufactured by Samsung Co.), and then 2 $\times$10 cm bar pictures using each of the ink compositions were printed using a printer (MJC-3300p, manufactured by Samsung Co.). The resulting images were dried for 24 hours, and then when rubbing the images 5 times using a tester, optical density (OD) of the transferred images of the bar pictures was compared to optical density (OD) of the images of the bar pictures before rubbing and expressed as a

percentage. The results were evaluated as follows and are shown in Table 1 below.

$$A = (\text{OD of transferred image}/\text{OD of original bar picture}) \times 100(\%)$$

◎ : A<15
○ : 15≤A<30
Δ : 30≤A≤45
X : A>45

Test of bleeding resistance

The ink compositions prepared according to Examples 1-6 and Comparative Examples 1-4 were refilled into ink cartridges M-50 (manufactured by Samsung Co.), and then a test pattern for each ink composition was printed with colored ink using a printer (MJC-3300p, manufactured by Samsung Co.). After 30 minutes, the position of a dot line at which color mixing occurred based on a borderline between two adjacent colors was measured with a microscope (evaluation standard: refer to US No. 5,854,307)

5: Color mixing did not occur in the borderline.
4: Color mixing corresponding to a width of a diameter of 1 dot occurred.
3: Color mixing corresponding to a width of 2 dot diameters occurred.
2: Color mixing corresponding to a width of 3 dot diameters occurred.
1: Color mixing corresponding to a width of 4 or more dot diameters occurred.

Table 1

| | Rub fastness | Bleeding resistance |
|---|---|---|
| Example 1 | ◎ | 5 |
| Example 2 | ○ | 4 |
| Example 3 | ○ | 5 |
| Example 4 | ◎ | 5 |
| Example 5 | ○ | 5 |
| Example 6 | ◎ | 5 |
| Comparative Example 1 | Δ | 3 |
| Comparative Example 2 | Δ | 2 |
| Comparative Example 3 | X | 2 |
| Comparative Example 4 | Δ | 3 |

As shown in Table 1, since the ink composition of the present invention includes an oxylate-based compound and an amide compound, the ink composition can minimize bleeding between colors of printed images and improve rub fastness to obtain excellent color fastness by decreasing mobility of the coloring agent and improving adherence of the coloring agent to paper.

The ink composition of the present invention minimizes bleeding between colors of printed images, improves rub fastness, and improves the quality of the printed images, and thus the ink composition can be widely used in inkjet ink, printing ink, paints, textile printing, paper manufacture, cosmetic manufacture, the ceramic industry and the like.

While the present invention has been particularly shown and described with reference to exemplary embodiments thereof, it will be understood by those of ordinary skill in the art that various changes in form and details may be made therein without departing from the spirit and scope of the present invention as defined by the following claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification

in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

**1.** An ink composition comprising:

an oxylate-based compound represented by Formula 1 below;
an amide compound represented by Formula 2 below;
a coloring agent; and
a solvent:

Formula 1 $Z_{4-n}C(R_1)_n$

where, Z is

$$-\!\left(O-R_2\right)_X\!\left(O-R_3\right)_y OH ,$$

where $R_2$ and $R_3$ are each independently selected from the group consisting of a substituted or unsubstituted $C_2$-$C_{20}$ alkylene group, a substituted or unsubstituted $C_2$-$C_{20}$ heteroalkylene group, a substituted or unsubstituted $C_6$-$C_{30}$ arylene group, a substituted or unsubstituted $C_6$-$C_{30}$ heteroarylene group, a substituted or unsubstituted $C_2$-$C_{20}$ alkenylene group, a substituted or unsubstituted $C_2$-$C_{20}$ heteroalkenylene group, a substituted or unsubstituted $C_5$-$C_{30}$ cycloakylene group, a substituted or unsubstituted $C_7$-$C_{30}$ aralkylene group, a carbonyl group and a carboxy group; and X and Y are each independently 0 or an integer from 1 to 40;

$R_1$ is selected from the group consisting of a hydrogen atom, a halogen atom, a hydroxyl group, an amino group, a nitro group, a cyano group, a substituted or unsubstituted $C_1$-$C_{20}$ alkyl group, a substituted or unsubstituted $C_2$-$C_{20}$ alkenyl group, a substituted or unsubstituted $C_1$-$C_{20}$ alkoxy group, a substituted or unsubstituted $C_1$-$C_{20}$ alkylsulfoneamide group, a substituted or unsubstituted $C_6$-$C_{20}$ arylsulfoneamide group, a substituted or unsubstituted $C_1$-$C_{20}$ acylamino group, a $C_1$-$C_{20}$ alkylureido group, a $C_6$-$C_{20}$ arylureido group, a $C_2$-$C_{20}$ alkoxycarbonyl group, a $C_2$-$C_{20}$ alkoxycarbonylamino group, a carbamoyl group, a sulfamoyl group, a sulfo group and a salt thereof, a carboxy group and a salt thereof, a substituted or unsubstituted $C_2$-$C_{20}$ hydroxyalkyloxyalkyl group, a substituted or unsubstituted $C_3$-$C_{20}$ dialkylaminoalkyl group, a substituted or unsubstituted $C_6$-$C_{20}$ pyridylalkyl group, a substituted or unsubstituted $C_5$-$C_{20}$ pyridyl group, a substituted or unsubstituted $C_6$-$C_{20}$ imidazolyl group, a hydrazine group, a hydrozone group, a substituted or unsubstituted $C_5$-$C_{30}$ cycloalkyl group, a substituted or unsubstituted $C_6$-$C_{30}$ aryl group, a substituted or unsubstituted $C_7$-$C_{30}$ arylalkyl group, a substituted or unsubstituted $C_1$-$C_{20}$ heteroalkyl group, a substituted or unsubstituted $C_2$-$C_{20}$ heteroalkenylene group, a substituted or unsubstituted $C_5$-$C_{20}$ heteroaryl group, a substituted or unsubstituted $C_6$-$C_{20}$ heteroarylalkyl group, a substituted or unsubstituted $C_6$-$C_{20}$ heteroarylalkenyl group, and a substituted or unsubstituted $C_3$-$C_{20}$ heterocycloalkyl group; and

n is 0 or an integer from 1 to 3; and

Formula 2

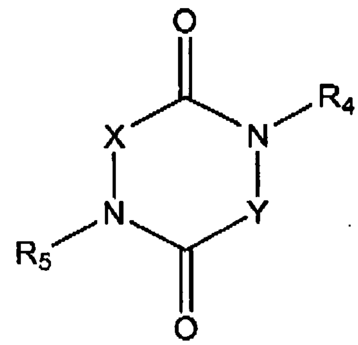

where, X and Y are each independently selected from the group consisting of a bond, a substituted or unsubstituted $C_1$-$C_8$ alkylene group, a substituted or unsubstituted $C_1$-$C_8$ heteroalkylene group, a substituted or unsubstituted $C_2$-$C_8$ alkenylene group, a substituted or unsubstituted $C_2$-$C_8$ heteroalkenylene group, a carbonyl group, a carboxy group, -O-, -S-, and -NH-; and

$R_4$ and $R_5$ are each independently selected from the group consisting of a hydrogen atom, a halogen atom, a hydroxyl group, an amino group, a nitro group, a cyano group, a substituted or unsubstituted $C_1$-$C_{20}$ alkyl group, a substituted or unsubstituted $C_2$-$C_{20}$ alkenyl group, a substituted or unsubstituted $C_1$-$C_{20}$ alkoxy group, a substituted or unsubstituted $C_1$-$C_{20}$ alkylsulfoneamide group, a substituted or unsubstituted $C_6$-$C_{20}$ arylsulfoneamide group, a substituted or unsubstituted $C_1$-$C_{20}$ acylamino group, a $C_1$-$C_{20}$ alkylureido group, a $C_6$-$C_{20}$ arylureido group, a $C_2$-$C_{20}$ alkoxycarbonyl group, a $C_2$-$C_{20}$ alkoxycarbonylamino group, a carbamoyl group, a sulfamoyl group, a sulfo group and a salt thereof, a carboxy group and a salt thereof, a substituted or unsubstituted $C_2$-$C_{20}$ hydroxyalkyloxyalkyl group, a substituted or unsubstituted $C_3$-$C_{20}$ dialkylaminoalkyl group, a substituted or unsubstituted $C_6$-$C_{20}$ pyridylalkyl group, a substituted or unsubstituted $C_5$-$C_{20}$ pyridyl group, a substituted or unsubstituted $C_6$-$C_{20}$ imidazolyl group, a hydrazine group, a hydrozone group, a substituted or unsubstituted $C_5$-$C_{30}$ cycloalkyl group, a substituted or unsubstituted $C_6$-$C_{30}$ aryl group, a substituted or unsubstituted $C_7$-$C_{30}$ arylalkyl group, a substituted or unsubstituted $C_1$-$C_{20}$ heteroalkyl group, a substituted or unsubstituted $C_2$-$C_{20}$ heteroalkenylene group, a substituted or unsubstituted $C_5$-$C_{20}$ heteroaryl group, a substituted or unsubstituted $C_6$-$C_{20}$ heteroarylalkyl group, a substituted or unsubstituted $C_6$-$C_{20}$ heteroarylalkenyl group, and a substituted or unsubstituted $C_3$-$C_{20}$ heterocycloalkyl group; or $R_4$ is connected to Y to form a ring group, a fusion ring group, or a double bond, and $R_5$ is connected to X to form a ring group, a fusion ring group, or a double bond; wherein the solvent is a mixture of a water-based solvent and an organic solvent selected from at least one of the group consisting of an alcohol, a ketone, an ester, a polyhydric alcohol, a nitrogen-containing compound and a sulfur-containing compound such as dimethyl sulfoxide, tetramethyl sulfone or thioglycol.

**2.** The ink composition of claim 1, wherein the compound represented by Formula 1 is selected from the group consisting of glycerol propoxylate, trimethylpropane propoxylate, pentaerythritol propoxylate, pentaerythritol ethoxylate, glycerol ethoxylate, trimethylpropane ethoxylate, bisphenol A propoxylate, neopentyl glycol propoxylate, neopentyl glycol ethoxylate, pentaerythritol propoxylate ethoxylate and mixtures thereof.

**3.** The ink composition of either of claims 1 and 2, wherein the amount of the oxylate-based compound represented by Formula 1 is about 1-20 parts by weight based on 100 parts by weight of the ink composition.

**4.** The ink composition of any preceding claim, wherein the amide compound represented by Formula 2 is selected from the group consisting of 1H-pyrimidine-2,4-dione represented by Formula 3, dihydro-pyrimidine-2,4-dione represented by Formula 4, piperazine-2,5-dione represented by Formula 5, imidazolidine-2,4-dione represented by Formula 6, 5-methyl-imidazolidine-2,4-dione represented by Formula 7, 1-methyl-imidazolidine-2,4-dione represented by Formula 8, and mixtures thereof

Formula 3

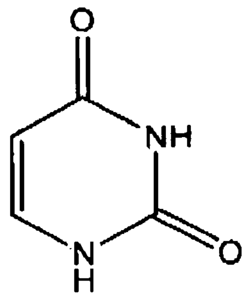

Formula 4

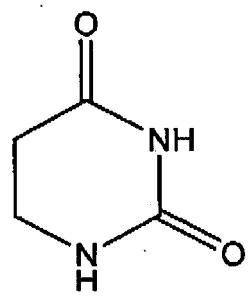

Formula 5

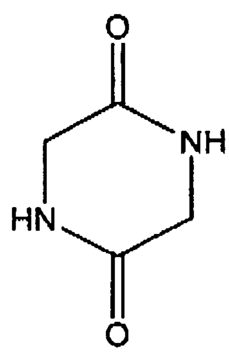

Formula 6

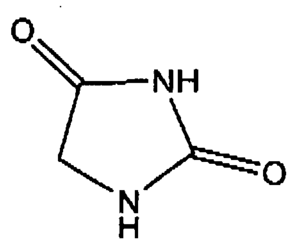

Formula 7

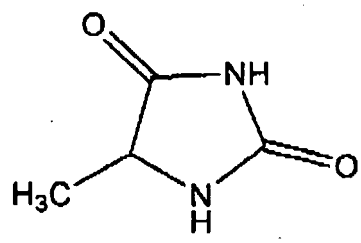

Formula 8

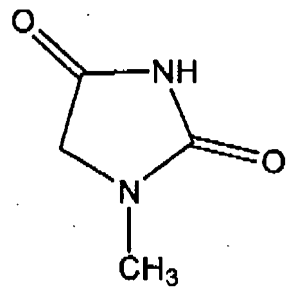

**5.** The ink composition of any preceding claim, wherein the amount of the amide compound represented by Formula 2 is about 1-20 parts by weight based on 100 parts by weight of the ink composition.

**6.** The ink composition of any preceding claim, wherein the amount of the coloring agent is about 0.1-15 parts by weight based on 100 parts by weight of the ink composition.

**7.** The ink composition of any preceding claim, wherein the amount of the solvent is about 70-90 parts by weight based on 100 parts by weight of the ink composition.

**8.** The ink composition of any preceding claim, wherein the solvent comprises 100 parts by weight of the water-based solvent and about 0.1-130 parts by weight of the organic solvent.

**9.** The ink composition of any preceding claim, wherein the surface tension of the ink composition is 15-70 dyne/cm at 20˚C.

**10.** The ink composition of any preceding claim, wherein the viscosity of the ink composition is 1.5-20 cps.

**11.** A multicolor ink set comprising at least one ink composition according to any preceding claim.

**12.** An ink cartridge for an inkjet recording apparatus comprising the multicolor ink set of claim 11.

**13.** An inkjet recording apparatus comprising the ink cartridge of claim 12.

**Patentansprüche**

**1.** Tintenzusammensetzung, umfassend:

eine oxylatbasierte Verbindung der nachstehenden Formel 1;
eine Amidverbindung der nachstehenden Formel 2;
ein Farbmittel; und
ein Lösungsmittel:

Formel 1 $Z_{4-n}C(R_1)_n$

in der die Formelglieder folgende Bedeutung haben:

Z ist

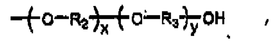

wobei $R_2$ und $R_3$ jeweils unabhängig voneinander ausgewählt sind aus der Gruppe bestehend aus einer gegebenenfalls substituierten $C_2$-$C_{20}$ Alkylengruppe, einer gegebenenfalls substituierten $C_2$-$C_{20}$ Heteroalkylengruppe, einer gegebenenfalls substituierten $C_6$-$C_{30}$ Arylengruppe, einer gegebenenfalls substituierten $C_6$-$C_{30}$ Heteorarylengruppe, einer gegebenenfalls substituierten $C_2$-$C_{20}$ Alkenylengruppe, einer gegebenenfalls substituierten $C_2$-$C_{20}$ Heteroalkenylengruppe, einer gegebenenfalls substituierten $C_5$-$C_{30}$ Cycloalkylengruppe, einer gegebenenfalls substituierten $C_7$-$C_{30}$ Aralkylengruppe, einer Carbonylgruppe und einer Carboxygruppe, und X und Y jeweils unabhängig voneinander 0 oder eine ganze Zahl von 1 bis 40 sind;
$R_1$ ist ausgewählt aus der Gruppe bestehend aus einem Wasserstoffatom, einem Halogenatom, einer Hydroxylgruppe, einer Aminogruppe, einer Nitrogruppe, einer Cyanogruppe, einer gegebenenfalls substituierten einer gegebenenfalls substituierten $C_1$-$C_{20}$ Alkylgruppe, einer gegebenenfalls substituierten $C_2$-$C_{20}$ Alkenylgruppe, einer gegebenenfalls substituierten $C_1$-$C_{20}$ Alkoxygruppe, einer gegebenenfalls substituierten $C_1$-$C_{20}$ Alkylsulfonamidgruppe, einer gegebenenfalls substituierten $C_6$-$C_{20}$ Arylsulfonamidgruppe, einer gegebenenfalls substituierten $C_1$-$C_{20}$ Acylaminogruppe, einer $C_1$-$C_{20}$ Alkylureidogruppe, einer $C_6$-$C_{20}$ Arylureidogruppe, einer $C_2$-$C_{20}$ Alkoxycarbonylgruppe, einer $C_2$-$C_{20}$ Alkoxycarbonylaminogruppe, einer Carbamoylgruppe, einer Sulfamoylgruppe, einer Sulfogruppe und einem Salz davon, einer Carboxygruppe und einem Salz davon, einer gegebenenfalls substituierten $C_2$-$C_{20}$ Hydroxyalkyloxyalkylgruppe, einer gegebenenfalls substituierten $C_3$-$C_{20}$ Dialkylaminoalkylgruppe, einer gegebenenfalls substituierten $C_6$-$C_{20}$ Pyridylalkylgruppe, einer gegebenenfalls substituierten $C_5$-$C_{20}$ Pyridylgruppe, einer gegebenenfalls substituierten $C_6$-$C_{20}$ Imidazolylgruppe, einer Hydrazingruppe, einer Hydrazongruppe, einer gegebenenfalls substituierten $C_5$-$C_{30}$ Cycloalkylgruppe, einer gegebenenfalls substituierten $C_6$-$C_{30}$ Arylgruppe, einer gegebenenfalls substituierten $C_7$-$C_{30}$ Arylalkylgruppe, einer gegebenenfalls substituierten $C_1$-$C_{20}$ Heteroalkylgruppe, einer gegebenenfalls substituierten $C_2$-$C_{20}$ Heteroalkenylengruppe, einer gegebenenfalls substituierten $C_5$-$C_{20}$ Heteroarylgruppe, einer gegebenenfalls substituierten $C_6$-$C_{20}$ Heteroarylalkylgruppe, einer gegebenenfalls substituierten $C_6$-$C_{20}$ Heteroarylalkenylgruppe und einer gegebenenfalls substituierten $C_3$-$C_{20}$ Heterocycloalkylgruppe; und
n ist 0 oder eine ganz Zahl von 1 bis 3; und

Formel 2

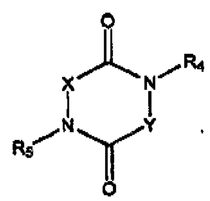

in der die Formelglieder folgende Bedeutung haben:

X und Y sind jeweils unabhängig voneinander ausgewählt aus der Gruppe bestehend aus einer Bindung, einer gegebenenfalls substituierten $C_1$-$C_8$ Alkylengruppe, einer gegebenenfalls substituierten $C_1$-$C_8$ Heteroalkylengruppe, einer gegebenenfalls substituierten $C_2$-$C_8$ Alkenylengruppe, einer gegebenenfalls substituierten $C_2$-$C_8$ Heteroalkenylengruppe, einer Carbonylgruppe, einer Carboxygruppe, -O-, -S- und -NH-; und
$R_4$ und $R_5$ sind jeweils unabhängig voneinander ausgewählt aus der Gruppe bestehend aus einem Wasserstoffatom, einem Halogenatom, einer Hydroxylgruppe, einer Aminogruppe, einer Nitrogruppe, einer Cyanogruppe, einer gegebenenfalls substituierten $C_1$-$C_{20}$ Alkylgruppe, einer gegebenenfalls substituierten $C_2$-$C_{20}$ Alkenylgruppe, einer gegebenenfalls substituierten $C_1$-$C_{20}$ Alkoxygruppe, einer gegebenenfalls

substituierten $C_1$-$C_{20}$ Alkylsulfonamidgruppe, einer gegebenenfalls substituierten $C_6$-C-$_{20}$ Arylsulfonamidgruppe, einer gegebenenfalls substituierten $C_1$-$C_{20}$ Acylaminogruppe, einer $C_1$-$C_{20}$ Alkylureidogruppe, einer $C_6$-$C_{20}$ Arylureidogruppe, einer $C_2$-$C_{20}$ Alkoxycarbonylgruppe, einer $C_2$-$C_{20}$ Alkoxycarbonylaminogruppe, einer Carbamoylgruppe, einer Sulfamoylgruppe, einer Sulfogruppe und einem Salz davon, einer Carboxygruppe und einem Salz davon, einer gegebenenfalls substituierten $C_2$-$C_{20}$ Hydroxyalkyloxyalkylgruppe, einer gegebenenfalls substituierten $C_3$-$C_{20}$ Dialkylaminoalkylgruppe, einer gegebenenfalls substituierten $C_6$-$C_{20}$ Pyridylalkylgruppe, einer gegebenenfalls substituierten $C_5$-$C_{20}$ Pyridylgruppe, einer gegebenenfalls substituierten $C_6$-$C_{20}$ Imidazolylgruppe, einer Hydrazingruppe, einer Hydrazongruppe, einer gegebenenfalls substituierten $C_{5-}C_{30}$ Cycloalkylgruppe, einer gegebenenfalls substituierten $C_{6-}C_{30}$ Arylgruppe, einer gegebenenfalls substituierten $C_{7-}C_{30}$ Arylalkylgruppe, einer gegebenenfalls substituierten $C_1$-$C_{20}$ Heteroalkylgruppe, einer gegebenenfalls substituierten $C_{2-}C_{20}$ Heteroalkenylengruppe, einer gegebenenfalls substituierten $C_{5-}C_{20}$ Heteroarylgruppe, einer gegebenenfalls substituierten $C_{6-}C_{20}$ Heteroarylalkylgruppe, einer gegebenenfalls substituierten $C_{6-}C_{20}$ Heteroarylalkenylgruppe und einer gegebenenfalls substituierten $C_{3-}C_{20}$ Heterocycloalkylgruppe; oder $R_4$ bildet mit Y eine Ringgruppe, eine Fusionsringgruppe oder eine Doppelbindung und $R_5$ bildet mit X eine Ringgruppe, eine Fusionsringgruppe oder eine Doppelbindung; wobei es sich bei dem Lösungsmittel um eine Mischung von einem wasserbasierten Lösungsmittel und einem organischen Lösungsmittel ausgewählt aus mindestens einem Mitglied der Gruppe bestehend aus einem Alkohol, einem Keton, einem Ester, einem mehrwertigen Alkohol, einer stickstoffhaltigen Verbindung und einer schwefelhaltigen Verbindung wie Dimethylsulfoxid, Tetramethylsulfon oder Thioglykol handelt.

**2.** Tintenzusammensetzung nach Anspruch 1, bei der die Verbindung der Formel 1 ausgewählt ist aus der Gruppe bestehend aus Glycerinpropoxylat, Trimethylpropanpropoxylat, Pentaerythritpropoxylat, Pentaerythritethoxylat, Glycerinethoxylat, Trimethylpropanethoxylat, Bisphenol-A-propoxylat, Neopentylglykolpropoxylat, Neopentylglykolethoxylat, Pentaerythritpropoxylatethoxylat und Mischungen davon.

**3.** Tintenzusammensetzung nach einem der Ansprüche 1 oder 2, bei der die oxylatbasierte Verbindung der Formel 1 in einer auf 100 Gewichtsteile der Tintenzusammensetzung bezogenen Menge von etwa 1-20 Gewichtsteile enthalten ist.

**4.** Tintenzusammensetzung nach einem der vorhergehenden Ansprüche, bei der die Amidverbindung der Formel 2 ausgewählt ist aus der Gruppe bestehend aus 1H-pyrimidin-2,4-dion der Formel 3, Dihydropyrimidin-2,4-dion der Formel 4, Piperazin-2,5-dion der Formel 5, Imidazolidin-2,4-dion der Formel 6, 5-Methylimidazolidin-2,4-dion der Formel 7, 1-Methylimidazolidin-2,4-dion der Formel 8 und Mischungen davon,

Formel 3

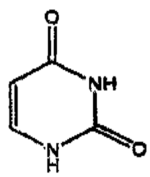

Formel 4

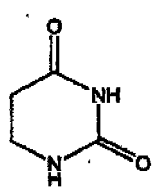

Formel 5

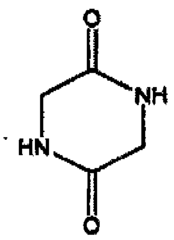

Formel 6

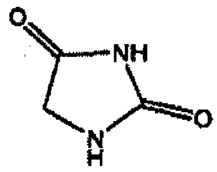

Formel 7

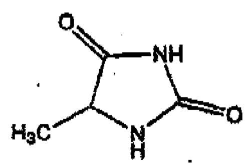

Formel 8

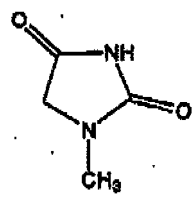

5. Tintenausammensetaung nach einem der vorhergehenden Ansprüche, bei der die Amidverbindung der Formel 2 in einer auf 100 Gewichtsteile der Tintenzusammensetzung bezogenen Menge von etwa 1-20 Gewichtsteile enthalten ist.

6. Tintenzusammensetzung nach einem der vorhergehenden Ansprüche, bei der das Farbmittel in einer auf 100 Gewichtsteile der Tintenzusammensetzung bezogenen Menge von etwa 0,1-15 Gewichtsteile enthalten ist.

7. Tintenzusammensetzung nach einem der vorhergehenden Ansprüche, bei der das Lösungsmittel in einer auf 100 Gewichtsteile der Tintenzusammensetzung bezogenen Menge von etwa 70-90 Gewichtsteile enthalten ist.

8. Tintenausammensetzung nach einem der vorhergehenden Ansprüche, bei der das Lösungsmittel 100 Gewichtsteile des wasserbasierten Lösungsmittels und etwa 0,1-130 Gewichtsteile des organischen Lösungsmittels umfaßt.

9. Tintenzusammensetzung nach einem der vorhergehenden Ansprüche, bei der die Oberflächenspannung der Tintenzusammensetzung bei 15-70 dyn/cm bei 20˚C liegt.

**10.** Tintenzusammensetzung nach einem der vorhergehenden Ansprüche, bei der die Viskosität der Zusammensetzung bei 1,5-20 cps liegt.

**11.** Mehrfarbige Tintenkombination, umfassend mindestens eine Tintenzusammensetzung gemäß einem der vorhergehenden Ansprüche.

**12.** Tintenpatrone für Farbstrahlaufzeichnungsvorrichtung, umfassend die mehrfarbige Tintenkombination gemäß Anspruch 11.

**13.** Farbstrahlaufzeichnungsvorrichtung, umfassend die Tintenpatrone gemäß Anspruch 12.

## Revendications

**1.** Composition d'encre comprenant :

un composé à base d'oxylate représenté par la formule 1 ci-dessous ;
un composé amide représenté par la formule 2 ci-dessous ;
un agent colorant ; et
un solvant :

Formule 1 $Z_{4-n}C(R_1)_n$

dans laquelle, Z est

$$-(O-R_2)_x-(O-R_3)_y-OH$$

où $R_2$ et $R_3$ sont choisis chacun indépendamment dans le groupe constitué d'un groupement alkylène en $C_{2-}C_{20}$ substitué ou non substitué, d'un groupement hétéroalkylène en $C_2$-$C_{20}$ substitué ou non substitué, d'un groupement arylène en $C_6$-$C_{30}$ substitué ou non substitué, d'un groupement hétéroarylène en $C_{6-}C_{30}$ substitué ou non substitué, d'un groupement alcénylène en $C_2$-$C_{20}$ substitué ou non substitué, d'un groupement hétéroalcénylène en $C_2$-$C_{20}$ substitué ou non substitué, d'un groupement cycloalkylène en $C_5$-$C_{30}$ substitué ou non substitué, d'un groupement aralkylène en $C_7$-$C_{30}$ substitué ou non substitué, d'un groupement carbonyle et d'un groupement carboxy ; et X et Y sont chacun indépendamment 0 ou un entier de 1 à 40 ;
$R_1$ est choisi dans le groupe constitué d'un atome d'hydrogène, d'un atome d'halogène, d'un groupement hydroxy, d'un groupement amino, d'un groupement nitro, d'un groupement cyano, d'un groupement alkyle en $C_1$-$C_{20}$ substitué ou non substitué, d'un groupement alcényle en $C_2$-$C_{20}$ substitué ou non substitué, d'un groupement alcoxy en $C_1$-$C_{20}$ substitué ou non substitué, d'un groupement alkylsulfonamide en $C_1$-$C_{20}$ substitué ou non substitué, d'un groupement arylsulfonamide en $C_6$-$C_{20}$ substitué ou non substitué, d'un groupement acylamino en $C_1$-$C_{20}$ substitué ou non substitué, d'un groupement alkyluréido en $C_1$-$C_{20}$, d'un groupement aryluréido en $C_6$-$C_{20}$, d'un groupement alcoxycarbonyle en $C_2$-$C_{20}$, d'un groupement alcoxycarbonylamino en $C_2$-$C_{20}$, d'un groupement carbamoyle, d'un groupement sulfamoyle, d'un groupement sulfo et d'un sel de celui-ci, d'un groupement carboxy et d'un sel de celui-ci, d'un groupement hydroxyalkyloxyalkyle en $C_2$-$C_{20}$ substitué ou non substitué, d'un groupement dialkylaminoalkyle en $C_3$-$C_{20}$ substitué ou non substitué, d'un groupement pyridylalkyle en $C_6$-$C_{20}$ substitué ou non substitué, d'un groupement pyridyle en $C_5$-$C_{20}$ substitué ou non substitué, d'un groupement imidazolyle en $C_6$-$C_{20}$ substitué ou non substitué, d'un groupement hydrazine, d'un groupement hydrazone, d'un groupement cycloalkyle en $C_5$-$C_{30}$ substitué ou non substitué, d'un groupement aryle en $C_6$-$C_{30}$ substitué ou non substitué, d'un groupement arylalkyle en $C_7$-$C_{30}$ substitué ou non substitué, d'un groupement hétéroalkyle en $C_1$-$C_{20}$ substitué ou non substitué, d'un groupement hétéroalcénylène en $C_2$-$C_{20}$ substitué ou non substitué, d'un groupement hétéroaryle en $C_5$-$C_{20}$ substitué ou non substitué, d'un groupement hétéroarylalkyle en $C_6$-$C_{20}$ substitué ou non substitué, d'un groupement hétéroarylalcényle en $C_6$-$C_{20}$ substitué ou non substitué et d'un groupement hétérocycloalkyle en $C_3$-$C_{20}$ substitué ou non substitué ; et
n est 0 ou un entier de 1 à 3 ; et

Formule 2

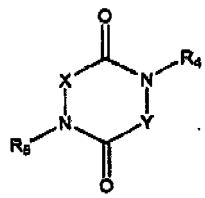

dans laquelle, X et Y sont choisis chacun indépendamment dans le groupe constitué d'une liaison, d'un groupement alkylène en $C_1$-$C_8$ substitué ou non substitué, d'un groupement hétéroalkylène en $C_1$-$C_8$ substitué ou non substitué, d'un groupement alcénylène en $C_2$-$C_8$ substitué ou non substitué, d'un groupement hétéroalcénylène en $C_2$-$C_8$ substitué ou non substitué, d'un groupement carbonyle, d'un groupement carboxy, de -O-, de -S- et de -NH- ; et

$R_4$ et $R_5$ sont choisis chacun indépendamment dans le groupe constitué d'un atome d'hydrogène, d'un atome d'halogène, d'un groupement hydroxy, d'un groupement amino, d'un groupement nitro, d'un groupement cyano, d'un groupement alkyle en $C_1$-$C_{20}$ substitué ou non substitué, d'un groupement alcényle en $C_2$-$C_{20}$ substitué ou non substitué, d'un groupement alcoxy en $C_1$-$C_{20}$ substitué ou non substitué, d'un groupement alkylsulfonamide en $C_1$-$C_{20}$ substitué ou non substitué, d'un groupement arylsulfonamide en $C_6$-$C_{20}$ substitué ou non substitué, d'un groupement acylamino en $C_1$-$C_{20}$ substitué ou non substitué, d'un groupement alkyluréido en $C_1$-$C_{20}$, d'un groupement aryluréido en $C_6$-$C_{20}$, d'un groupement alcoxycarbonyle en $C_2$-$C_{20}$, d'un groupement alcoxycarbonylamino en $C_2$-$C_{20}$, d'un groupement carbamoyle, d'un groupement sulfamoyle, d'un groupement sulfo et d'un sel de celui-ci, d'un groupement carboxy et d'un sel de celui-ci, d'un groupement hydroxyalkyloxyalkyle en $C_2$-$C_{20}$ substitué ou non substitué, d'un groupement dialkylaminoalkyle en $C_3$-$C_{20}$ substitué ou non substitué, d'un groupement pyridylalkyle en $C_6$-$C_{20}$ substitué ou non substitué, d'un groupement pyridyle en $C_5$-$C_{20}$ substitué ou non substitué, d'un groupement imidazolyle en $C_6$-$C_{20}$ substitué ou non substitué, d'un groupement hydrazine, d'un groupement hydrazone, d'un groupement cycloalkyle en $C_5$-$C_{30}$ substitué ou non substitué, d'un groupement aryle en $C_6$-$C_{30}$ substitué ou non substitué, d'un groupement arylalkyle en $C_7$-$C_{30}$ substitué ou non substitué, d'un groupement hétéroalkyle en $C_1$-$C_{20}$ substitué ou non substitué, d'un groupement hétéroalcénylène en $C_2$-$C_{20}$ substitué ou non substitué, d'un groupement hétéroaryle en $C_5$-$C_{20}$ substitué ou non substitué, d'un groupement hétéroarylalkyle en $C_6$-$C_{20}$ substitué ou non substitué, d'un groupement hétéroarylalcényle en $C_6$-$C_{20}$ substitué ou non substitué et d'un groupement hétérocycloalkyle en $C_3$-$C_{20}$ substitué ou non substitué ; ou $R_4$ est lié à Y pour former un groupement cyclique, un groupement cyclique de condensation ou une double liaison, et $R_5$ est lié à X pour former un groupement cyclique, un groupement cyclique de condensation, ou une double liaison ; le solvant étant un mélange d'un solvant aqueux et d'un solvant organique choisi parmi au moins un solvant du groupe constitué d'un alcool, d'une cétone, d'un ester, d'un alcool polyhydrique, d'un composé azoté et d'un composé soufré tel que le diméthylsulfoxyde, la tétraméthylsulfone ou le thioglycol.

**2.** Composition d'encre selon la revendication 1, **caractérisée en ce que** le composé représenté par la formule 1 est choisi dans le groupe constitué de propoxylate de glycérol, de propoxylate de triméthylpropane, de propoxylate de pentaérythritol, d'éthoxylate de pentaérythritol, d'éthoxylate de glycérol, d'éthoxylate de triméthylpropane, de propoxylate de bisphénol A, de propoxylate de néopentylglycol, d'éthoxylate de néopentylglycol, de propoxylate éthoxylate de pentaérythritol et de mélanges de ceux-ci.

**3.** Composition d'encre selon la revendication 1 ou 2, **caractérisée en ce que** la quantité de composé à base d'oxylate représenté par la formule 1 est d'environ 1 à 20 parties en poids sur la base de 100 parties en poids de la composition d'encre.

**4.** Composition d'encre selon l'une quelconque des revendications précédentes, **caractérisée en ce que** le composé amide représenté par la formule 2 est choisi dans le groupe constitué de 1H-pyrimidine-2,4-dione représentée par la formule 3, dihydro-pyrimidine-2,4-dione représentée par la formule 4, pipérazine-2,5-dione représentée par la formule 5, imidazolidine-2,4-dione représentée par la formule 6, 5-méthyl-imidazolidine-2,4-dione représentée par la formule 7, 1-méthyl-imidazolidine-2,4-dione représentée par la formule 8, et des mélanges de celles-ci,

Formule 3

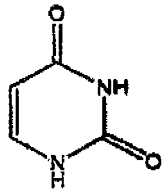

Formule 4

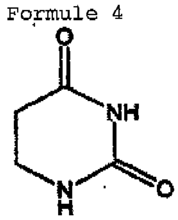

Formule 5

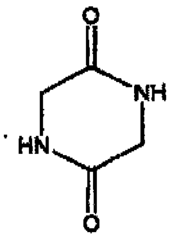

Formule 6

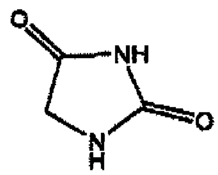

Formule 7

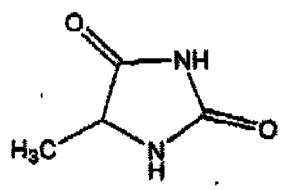

Formule 8

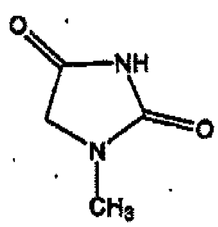

**5.** Composition d'encre selon l'une quelconque des revendications précédentes, **caractérisée en ce que** la quantité de composé amide représenté par la formule 2 est d'environ 1 à 20 parties en poids sur la base de 100 parties en poids de la composition d'encre.

**6.** Composition d'encre selon l'une quelconque des revendications précédentes, **caractérisée en ce que** la quantité d'agent colorant est d'environ 0,1 à 15 parties en poids sur la base de 100 parties en poids de la composition d'encre.

**7.** Composition d'encre selon l'une quelconque des revendications précédentes, **caractérisée en ce que** la quantité de solvant est d'environ 70 à 90 parties en poids sur la base de 100 parties en poids de la composition d'encre.

**8.** Composition d'encre selon l'une quelconque des revendications précédentes, **caractérisée en ce que** le solvant comprend 100 parties en poids du solvant aqueux et environ 0,1 à 130 parties en poids du solvant organique.

**9.** Composition d'encre selon l'une quelconque des revendications précédentes, **caractérisée en ce que** la tension superficielle de la composition d'encre est de 15 à 70 dyne/cm à 20°C.

**10.** Composition d'encre selon l'une quelconque des revendications précédentes, **caractérisée en ce que** la viscosité de la composition d'encre est de 1,5 à 20 cps.

**11.** Ensemble d'encre multicolore comprenant au moins une composition d'encre selon l'une quelconque des revendications précédentes.

**12.** Cartouche d'encre pour un appareil d'enregistrement à jet d'encre comprenant l'ensemble d'encre multicolore de la revendication 11.

**13.** Appareil d'enregistrement à jet d'encre comprenant la cartouche d'encre de la revendication 12.

FIG. 1

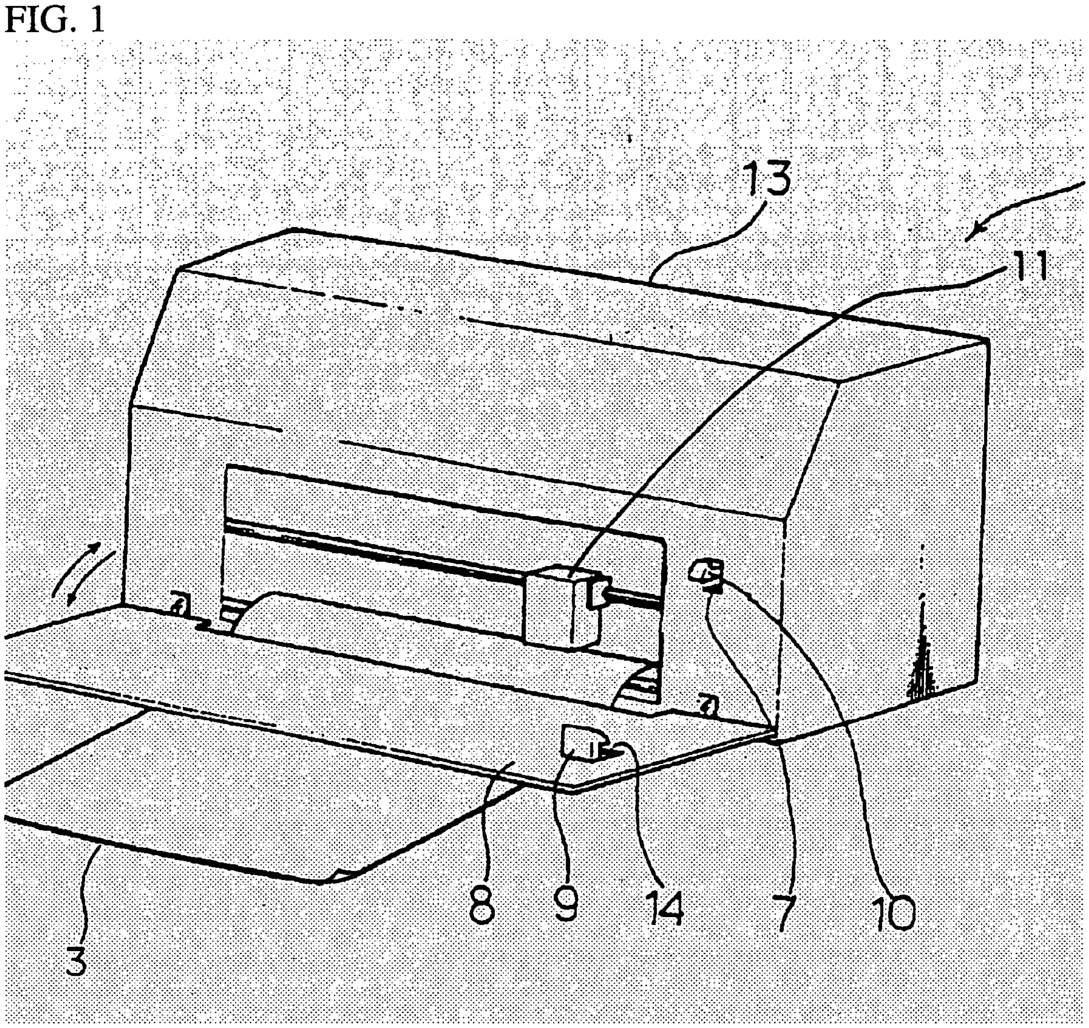

FIG. 2

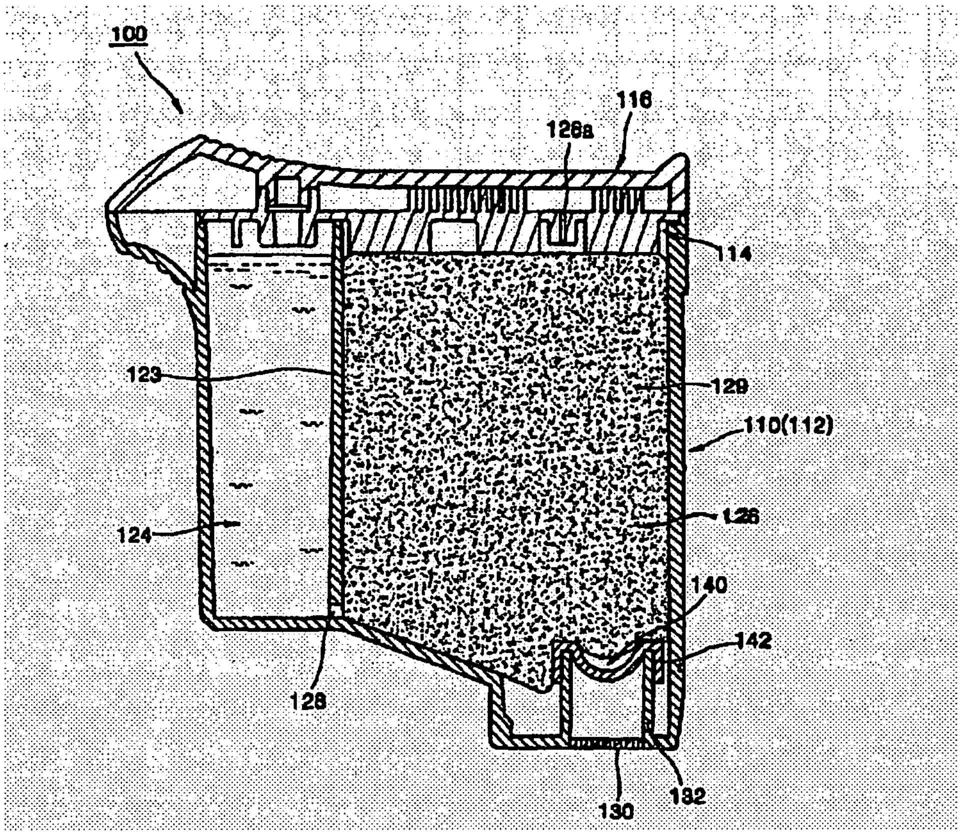

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5172133 A
- US 5529616 A
- US 6946023 B
- US 4694302 A
- US 5623294 A
- US 5629359 A
- US 5854307 A